# EUROPEAN PATENT SPECIFICATION

(11) **EP 4 303 573 B1**
(45) Date of publication and mention of the grant of the patent: **08.04.2026**
(21) Application number: 23181058.1
(22) Date of filing: 22.06.2023
(51) Int. Cl.: G01N 21/90, B65G 54/02, B67C 3/24

(54) **INSPECTION APPARATUS FOR A PACKAGING MACHINE AND PACKAGING MACHINE HAVING AN INSPECTION APPARATUS**
INSPEKTIONSVORRICHTUNG FÜR EINE VERPACKUNGSMASCHINE SOWIE VERPACKUNGSMASCHINE MIT EINER INSPEKTIONSVORRICHTUNG
APPAREIL D'INSPECTION POUR UNE MACHINE D'EMBALLAGE ET MACHINE D'EMBALLAGE DOTÉE D'UN APPAREIL D'INSPECTION

(30) Priority: 07.07.2022 EP 22183603
(43) Date of publication of application: 10.01.2024
(73) Proprietor: Tetra Laval Holdings & Finance S.A., 1009 Pully (CH)
(72) Inventor: PICCININI, Giorgio, 41123 Modena (IT); MELANDRI, Antonio, 41123 Modena (IT); ROSSI, Stefano, 41123 Modena (IT); VIOLA, Massimo, 41123 Modena (IT); FLORE, Stefano, 41123 Modena (IT); SCARABELLI, Paolo, 41123 Modena (IT)
(74) Representative: Tetra Pak Patent Attorneys

(56) References cited:
- EP-A1- 3 050 705
- WO-A1-2021/001319
- US-A1- 2018 072 551
- US-A1- 2022 035 345

## Description

### TECHNICAL FIELD

The present invention relates to an inspection apparatus for a packaging machine.

Advantageously, the present invention also relates to a packaging machine for the packaging of pourable products, in particular pourable food products, into packages, in particular packages formed from a multilayer packaging material, and having at least one inspection apparatus.

### BACKGROUND ART

As is known, many liquid or pourable food products, such as fruit juice, UHT (ultra-high-temperature treated) milk, wine, tomato sauce, etc., are sold in packages, in particular sealed packages, made of sterilized packaging material.

A typical example is the parallelepiped-shaped package for pourable food products known as Tetra Brik Aseptic (registered trademark), which is made by sealing and folding a laminated strip packaging material. The packaging material has a multilayer structure comprising a carton and/or paper base layer, covered on both sides with layers of heat-seal plastic material, e.g. polyethylene. In the case of aseptic packages for long-storage products, the packaging material also comprises a layer of oxygen-barrier material, e.g. an aluminum foil, which is superimposed on a layer of heat-seal plastic material, and is in turn covered with another layer of heat-seal plastic material forming the inner face of the package eventually contacting the food product.

Packages of this sort are normally produced on fully automatic packaging machines, which form and fill the packages starting from a multilayer packaging material. Such automatic packaging machines come along with significant production speeds (more than 10000 packages per hour or even significantly faster).

It is known that samples of the produced packages are analyzed for quality control reasons according to defined sampling plans. Often the execution of such sampling plans requires the intervention of a technical operator. An example of a container processing system can be found in document US2022/035345 A1. Even though the known packaging machines operate satisfyingly well, a desire is felt in the sector to further improve the known packaging machines.

### DISCLOSURE OF INVENTION

It is therefore an object of the present invention to provide in a straightforward and low-cost manner an inspection apparatus for a packaging machine, in particular an inspection apparatus configured to inspect packages formed within the packaging machine, even more particular an inspection apparatus configured to inspect the packages formed within the packaging machine and to control the quality of the packages.

It is a further object of the present invention to provide in a straightforward and low-cost manner a packaging machine having an inspection apparatus, in particular an inspection apparatus configured to inspect packages formed within the packaging machine, even more particular an inspection apparatus configured to inspect the packages formed within the packaging machine and to control the quality of the packages.

According to the present invention, there is provided an inspection apparatus according to the independent claim 1.

Preferred embodiments of the inspection apparatus are claimed in the claims being directly or indirectly dependent on claim 1.

According to the present invention, there is also provided a packaging machine according to claim 15.

### BRIEF DESCRIPTION OF THE DRAWINGS

Two non-limiting embodiments of the present invention will be described by way of example with reference to the accompanying drawings, in which:
Figure 1 is a schematic view of a packaging machine having at least one inspection apparatus according to the present invention, with parts removed for clarity;
Figure 2 is a schematic top view of a first embodiment of an inspection apparatus according to the present invention, with parts removed for clarity;
Figure 3 is a perspective view of a detail of the inspection apparatus of Figure 2, with parts removed for clarity;
Figure 4 is a second embodiment of an inspection apparatus according to the present invention, with parts removed for clarity; and
Figures 5 to 7 schematically illustrate three variations of a detail of the inspection apparatus of Figure 1, with parts removed for clarity.

### BEST MODES FOR CARRYING OUT THE INVENTION

Number 1 indicates as a whole a packaging machine for producing packages 2 filled with a pourable product, in particular a pourable food product, such as (pasteurized) milk, fruit juice, wine, tomato sauce, salt, sugar, emulsions, yoghurt, milk drinks etc.

Packaging machine 1 may be configured to produce packages 2 filled with the pourable product.

In more detail, packaging machine 1 may be configured to produce packages 2 from a packaging material having a multilayer configuration.

In further detail, the packaging material may comprise at least one layer of fibrous material, such as e.g. a paper or cardboard, and at least two layers of heat-seal plastic material, e.g. polyethylene, interposing the layer of fibrous material in between one another. One of these two layers of heat-seal plastic material may define the inner face of package 2 contacting the pourable product.

Moreover, the packaging material may also comprise a layer of gas- and light-barrier material, e.g. aluminum foil or ethylene vinyl alcohol (EVOH) film, in particular being arranged between one of the layers of the heat-seal plastic material and the layer of fibrous material. Preferentially, the packaging material may also comprise a further layer of heat-seal plastic material being interposed between the layer of gas- and light-barrier material and the layer of fibrous material.

In further detail, the packaging material may be provided in the form of a web 3.

Each package 2 obtained by packaging machine 1 may comprise a longitudinal seam portion.

Additionally, each package 2 may also comprise a pair of a respective first transversal sealing band and a respective second transversal sealing band, in particular arranged at opposite sides of package 2. In particular, the first transversal sealing band may define a transversal top sealing band and the second transversal sealing band may define a transversal bottom sealing band.

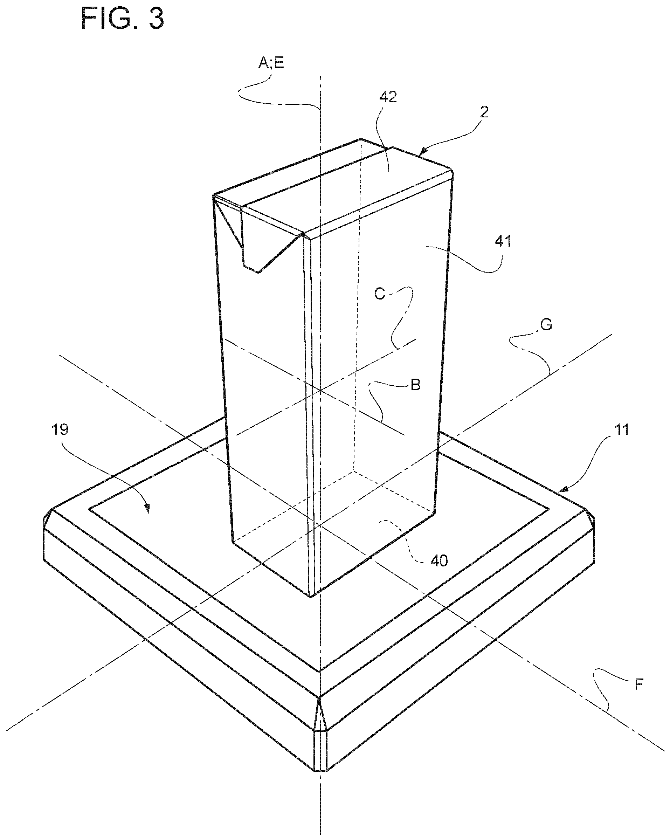

In further detail and with particular reference to Figure 3, each package 2 may comprise a first wall 40, in particular carrying and/or having the first transversal sealing band. Preferably, first wall 40 may define a support surface of package 2, which may be designed to be put in contact with a support, such as e.g. a shelf, when, in use, being e.g. exposed within a sales point or when being stored or when being transported. In particular, when being arranged on the support first wall 40 may define a bottom wall.

Additionally, each package 2 may also comprise a side wall 41 being (fixedly) connected to first wall 40 and may extend from first wall 40. In particular, side wall 41 may carry and/or have at least a portion of the longitudinal seam portion.

Moreover, each package 2 may also comprise a second wall 42 opposed to first wall 41 and being (fixedly) connected to side wall 41. In particular, side wall 41 may be interposed between first wall 40 and second wall 42.

Preferentially, each side wall 41 may carry and/or have the second transversal sealing band

In particular, when package 2 may be arranged on a support, second wall 42 may define a top wall.

According to the shown non-limiting embodiment, first wall 41 and second wall 42 may be parallel to one another.

According to non-limiting alternative embodiments not shown, first wall 41 and second wall 42 may be inclined with respect to one another. In particular, second wall 42 may define a slanted top or may define a portion of a gable-top.

According to some possible embodiments not shown, each package 2 may also comprise a closure, e.g. applied onto second wall 42. The closure may e.g. applied after, during or prior to forming, filling and sealing of the packaging material.

According to some possible non-limiting embodiments not shown, each package 2 may also comprise a straw, labels, promotional material or the like.

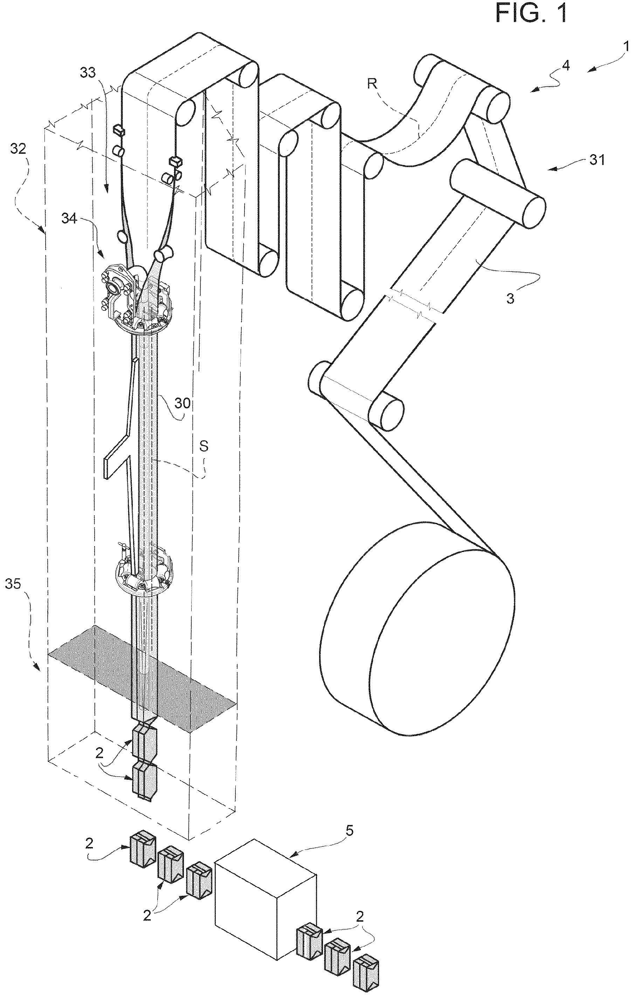

With particular reference to Figure 1, packaging machine 1 may comprise:
- a package filling apparatus 4 for filling packages 2, in particular for forming and filling packages 2, even more particular for forming packages 2 from the multilayer packaging material and filling packages 2; and
- at least one inspection apparatus 5 for selectively inspecting, and in particular also to execute a quality control of, one or more packages 2 produced within package filling apparatus 4.

In particular, inspection apparatus 5 may be arranged downstream from packaging filling apparatus 4; i.e. inspection apparatus 5 receives, in use, packages 2 from package filling apparatus 4.

Preferentially, inspection apparatus 5 may be configured to selectively inspect, in particular to also determine the quality of and/or to detect defects of, packages 2.

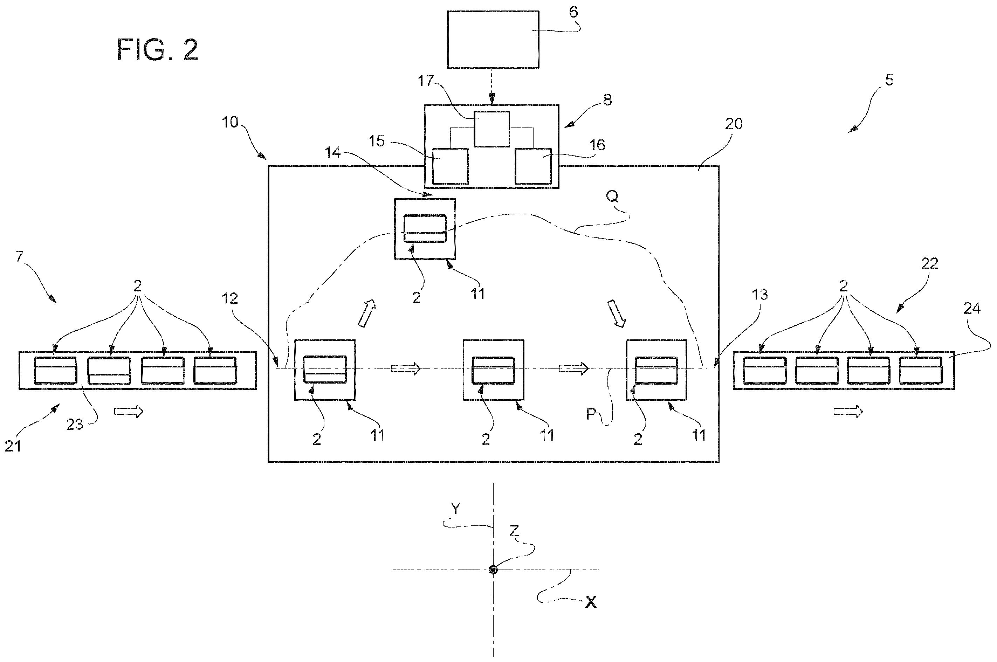

With particular reference to Figure 2, inspection apparatus 5 comprises:
- a control unit 6 for controlling operation of inspection apparatus 5 itself;
- a conveying device 7, in particular being operatively connected to control unit 6; and
- one or more inspection units 8, in the specific example shown one, configured to inspect, in particular to also determine the quality of and/or to detect defects of, packages 2.

Preferentially, control unit 6 may be configured to control operation of conveying device 7 so as to selectively advance packages 2 to each inspection unit 8.

Preferentially, control unit 6 may be configured to control operation of each inspection unit 8.

In more detail, conveying device 7 comprises a planar motor 10 having a plurality of carriers 11 configured to receive packages 2 at an inlet station 12 and to deliver packages 2 to an outlet station 13.

In particular, control unit 6 is operatively connected to planar motor 10 and configured to control operation of planar motor 10, in particular movement of carriers 11.

The control unit 6 is configured to selectively control movement of each carrier 11.

In particular, control unit 6 may be configured to selectively control movement of each carrier 11 independently from the other carriers 11. In this context, independently means that control unit 6 may accelerate and decelerate each carrier 11 in a selective manner, which may differ from any acceleration and deceleration of other carriers 11. Furthermore, control unit 6 may control movement of each carrier 11 such to avoid any undesired impact with the one or more other carriers 11.

Further reverting to Figure 2, each inspection unit 8 may be arranged adjacent to planar motor 10 at an inspection station 14, in particular such that each inspection unit 8 may be able to inspect these packages 2, which are moved, in use, to inspection station 14.

The inspection unit 8 may be positioned adjacent to the planar motor 10 or the inspection unit 8 may be positioned at least partially at (e.g. on or in a layer of) the planar motor 10.

Moreover, control unit 6 may be configured to selectively control movement of each carrier 11, in particular together with the respective package 2, so as to selectively direct at least some of the carriers 11 to inspection station 14 and then to outlet station 13. Preferentially, control unit 6 may be configured to selectively control movement of carriers 11 so as to selectively direct one or more of the carriers 11 and therewith of the respective packages 2 to inspection station 14 according to a determined sampling plan.

In particular, control unit 6 may be configured to control movement of carriers 11 so as to direct only these packages 2 to inspection station 14 which shall be inspected, in particular for determining the quality and/or to detect defects of the respective packages 2.

Additionally, control unit 6 may be configured to control movement of carriers 11 so as to move, in particular to directly move, these carriers 11, which carry packages 2, which shall not be inspected, to outlet station 13 (without passing through inspection station 14).

In other words, control unit 6 may be configured to selectively move, in particular to directly move, carriers 11 along a first path P from inlet station 12 to outlet station 13 or along a second path Q distinct from first path Q from inlet station 12 to inspection station 14, in particular from inlet station 12 to inspection station 14 and from inspection station 14 to outlet station 13.

Preferentially, a first imaginary line extending from inlet station 12 to inspection station 14 and a second imaginary line from inspection station 14 to outlet station 13 describe and/or define an angle different from 180° or different from a multiple of 180°. In other words, the second path Q cannot be described by a straight line.

As schematically shown in Figure 2, each inspection unit 8 may comprise an imaging device 15 configured to acquire images of these packages 2, which, in use, are moved to inspection station 14. In particular, imaging device 15 may be positioned such that imaging device 15 may be arranged above package 2, which in use, is moved to inspection station 14. In other words, in use, the package 2 being at inspection station 14 is interposed between the respective carrier 11 and imaging device 15.

In addition or alternatively, each inspection unit 8 may comprise a scanning device 16, in particular a laser scanning device 16, configured to scan and to obtain data about the three dimensional structure of these packages 2 moved to inspection station 14.

Preferentially, scanning device 16 may be configured to scan the respective side wall 41, and in particular of the respective second wall 42, of the respective packages 2.

In the example embodiment shown, inspection unit 8 may comprise both scanning device 16 and imaging device 15. However, it must be stressed that inspection unit 8 may comprise only imaging device 15 or only scanning device 16.

According to some other embodiments, inspection apparatus 5 may also comprise more than one inspection unit 8.

According to some possible non-limiting embodiments, each or some inspection units 8 may comprise one respective imaging device 15 and/or one respective scanning device 16.

According to some preferred non-limiting embodiments, inspection apparatus 5 may comprise at least one analyzing device 17, preferentially being operatively coupled to each imaging device 15 and/or to each scanning device 16.

According to the example embodiment shown, each inspection unit 8 may comprise one respective analyzing device 17.

Alternatively, inspection apparatus 5 may comprise one central analyzing device 17 operatively coupled to each inspection unit 8, in particular the respective imaging device 15 and/or the respective scanning unit 16.

Each analyzing device 17 may be configured to analyze the images acquired by imaging device 15 and/or may be configured to reconstruct a three-dimensional model of the respective packages 2 based on the three-dimensional data obtained by scanning unit 16.

Preferentially, each inspection unit 8 and/or each analyzing device 17 may be configured to determine the quality and/or to detect defects of the respective packages 2, in particular based on an analysis of the respective images and/or of the respective three-dimensional models.

According to the claimed invention, one or more inspection units 8 are configured to inspect packages 2 such to determine a weight of packages 2.

More specifically, one or more inspection units 8 comprises each a respective weight detection sensor 9, preferentially connected to the respective analyzing device 17, and being configured to determine the weight of these packages 2 directed to the respective inspection station 14.

According to the claimed invention, weight detection sensor 9 comprises at least one sensor 26, e.g. a strain gauge, preferentially operatively connected to the respective analyzing device 17.

In particular, the respective analyzing device 17 may be configured to determine the quality of the packages 2 by comparing the determined weight with a desired weight.

Alternatively or additionally, one or more or all inspection units 8 and/or one or more or all analyzing devices 17 may be configured to determine on whether packages 2 correspond to a desired shape and/or on any deviation from the desired shape.

One or more inspection units 8 and/or one or more analyzing devices 17 may also be configured to detect defects such as an erroneous sealing, deformations, erroneous weights and others.

According to some possible embodiments, one or more or all inspection units 8 and/or one or more or all analyzing devices 17 may be configured to control the quality of one or more portions of packages 2. Such portions may e.g. be closures, straws, labels, promotional material and the like.

According to some possible embodiments, one or more or all inspection units 8 and/or one or more or all analyzing devices 17 may be configured to control printed information present on packages 2. Such printed information may be a best-before-date, a production lot, a production location, an EAN number, and the like.

Preferentially, one or more or all inspection units 8 and/or one or more or all analyzing devices 17 may also be configured to control on whether the printed information corresponds to an expected printed information. E.g. it may be possible to control on whether the best-before-date or the EAN-number printed on package 2 corresponds to the desired best-before-date or the desired EAN-number.

According to some possible non-limiting embodiments, one or more or all inspection apparatuses 5 may also comprise a treatment unit configured to treat packages 2. E.g. the treatment unit may be configured to apply and/or print decorations and/or information and/or objects (e.g. straws, closures, label, promotional material, and the like) onto packages 2. Preferentially, one or more or all inspection units 8 and/or one or more or all analyzing devices 17 may be configured to control packages 2 after, prior and/or during treatment.

Additionally, one or more or all inspection units 8 and/or one or more or all analyzing devices 17 may be configured to control on whether a desired treatment result was obtained.

According to some preferred non-limiting embodiments, inspection apparats 5, e.g. one or more inspection units 8, may be configured to signal the inspection results to control unit 6 and/or a technical operator and/or to package producing apparatus 4.

E.g. package producing apparatus 4 may be configured to modify operation parameters automatically and/or a technical operator may modify operation parameters of package producing apparatus 4 in dependence of the inspection results.

With particular reference to Figure 3, each carrier 11 may comprise a support surface 19 for carrying the respective package 2.

In particular, each package 2 may extend along a longitudinal axis A, a first transversal axis B and a second transversal axis C being perpendicular to one another. Preferentially, an extension of package 2 along longitudinal axis A may be larger than respective extensions along first transversal axis B and second transversal axis C. Preferentially, the respective first walls 40 and the respective second walls 42 may be spaced apart from one another along longitudinal axis A.

Preferentially, each package 2 may be arranged on the respective carrier 11 such that the respective longitudinal axis A is transversal, in particular perpendicular, to support surface 19.

In particular, each first wall 41 may be in contact with support surface 19 when being placed on the respective carrier 11.

With reference to Figures 2 and 3, each carrier 11 may be configured, in particular through control by control unit 6, to rotate the respective package 2 around a rotation axis E at inspection station 14.

Preferentially, each carrier 11 is configured to rotate itself around rotation axis E for rotating the respective package 2 around rotation axis E.

Furthermore, rotation axis E may be parallel to the respective longitudinal axis A of the respective package 2.

In further detail, rotation axis E may be transversal, in particular substantially perpendicular, to the respective support surface 19.

In particular, rotation of packages 2 around rotation axis E may be advantageous during operation of scanning device 16 and/or imaging device 15.

More specifically, control unit 6 may be configured to control movement of each carrier 11 along three linear axes and around three rotational axes. In other words, each carrier 11 comes along with six degrees of freedom.

Even more specifically, control unit 6 may be configured to control movement of each carrier 11 along a first linear axis X, a second linear axis Y perpendicular to the first linear axis X and a third linear axis Z perpendicular to the first linear axis X and the second linear axis Y. In this way, it is possible to control the position of each carrier 11 (and therewith also of the respective packages 2) in a three-dimensional space.

Moreover, each control unit 6 may be configured to control angular movements of each carrier 11 around rotation axis E, a second rotation axis F perpendicular to rotation axis E and a third rotation axis G perpendicular to rotation axis E and second rotation axis F. This allows to control the angular positions of carriers 11 (and therewith also of the respective packages 2).

By providing for six-degrees of freedom, it is possible to precisely control angular and spatial positions of packages 2, in particular for improving the inspection of packages 2.

With particular reference to Figure 2, planar motor 10 may also comprise a planar control module 20, in particular being operatively coupled to control unit 6.

Preferentially, planar control module 20 may comprise a plurality of coils configured to generate local electromagnetic fields for selectively moving carriers 11.

Control unit 6 may be configured to control the plurality of coils in order to control movement of carriers 11, in particular along first linear axis X, second linear axis Y and third linear axis Z and around rotation axis E, second rotation axis F and third rotation axis G.

More specifically, control unit 6 may be configured to control carriers 11 along third linear axis Z so as to elevate carriers 11 from planar control module 20. In particular, with the coils being powered off, carriers 11 are placed on planar control module 20.

Moreover, planar control module 20 may extend along a first axis, in particular parallel to first linear axis X, and a second axis, in particular parallel to second linear axis Y.

Advantageously, each carrier 11 may comprise at least one magnetic and/or ferromagnetic element allowing for interaction of each carrier 11 with the local electromagnetic fields generated by the coils.

Control unit 6 may be configured to selective control movement of each carrier 11 along the first axis and first linear axis X and the second axis and the second linear axis Y by controlling the interaction of the local electromagnetic fields with the at least one magnetic and/or ferromagnetic element of each carrier 11.

According to some preferred non-limiting embodiment, planar control module 20 may comprise a plurality of modules, each module having one or more of the respective coils. Moreover, each module may be in contact within one or more neighboring modules. Additionally, the plurality of modules are arranged such to define the extension of planar control module 20 along the first axis and the second axis.

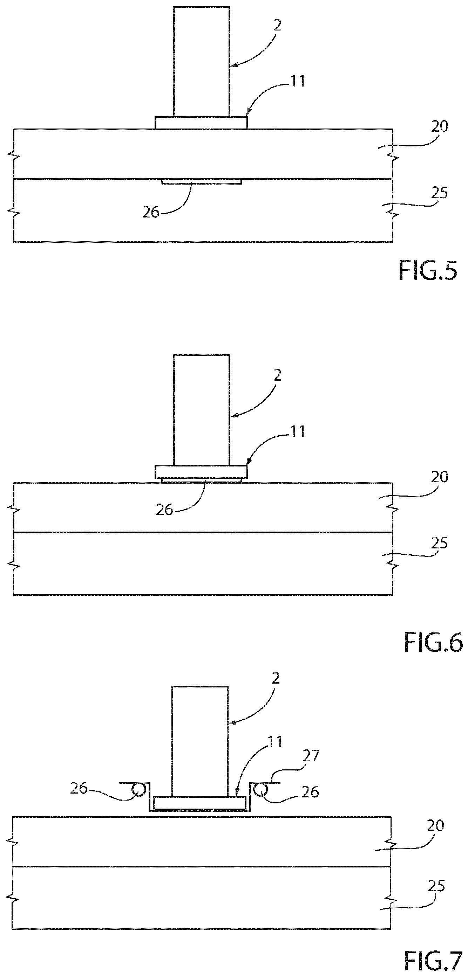

According to some preferred non-limiting embodiments, planar motor 10 may also comprise a support structure 25 (schematically shown in Figures 5 to 7) carrying planar control module 20, preferentially the modules.

Figures 5 to 7 schematically illustrate different variants of weight detection sensors 9 configured to determine the weight of the respective packages 2 moved to the respective inspection stations 14.

Preferentially and independently on the specific variant, control unit 6 may be configured to power off carriers 11 at the respective inspection station 14, e.g. during a step of weight measuring. The electromagnetic field may be locally turned off so that the respective carrier 11 is not subjected to any electromagnetic forces; this is advantageous as the weight measurement is not influenced by any electromagnetic forces acting on the respective carrier 11, which may add positively or negatively to the gravitational forces.

Furthermore, each weight detection sensor 9 may comprise one or more sensors 26, e.g. one or more strain gauges or an electro-magnetic force restoration sensor.

According to the variant shown in Figure 5, which is outside the scope of the claimed invention, each sensor 26 may be arranged at the respective inspection station 14 and may be interposed between support structure 25 and planar control module 20, preferentially at least one respective module.

According to such a variant, control unit 6 may be configured to power off each carrier 11 moved to the respective inspection station 14 so as to place carrier 11 on planar control module 20, preferentially the respective module. Moreover, afterwards, the respective one or more sensors 26 generate signals depending on the weight of carrier 11 and the respective package 2 carrier by carrier 11. As carrier 11 has a defined weight, it is possible to deduce the weight of package 2.

According to the variant of Figure 6, which is outside of the scope of the claimed invention, each sensor 26 may be arranged on planar control module 20, preferentially one respective module.

According to such a variant, control unit 6 may be configured to power off each carrier 11 moved to the respective inspection station 14 so as to place carrier 11 directly onto the one or more respective sensors 26.

According to the variant of Figure 7, each weight detection sensor 9 comprises a support 27 configured to carry the respective carrier 11, preferentially during a step of weight measuring. Additionally, the one or more sensors 26, such as one or more strain gauges, are coupled to support 27.

Moreover, each support 27 may be suspended from planar control module 20 (i.e. support 27 may be spaced apart from planar control module 20 along a third axis perpendicular to the first axis and the second axis).

According to such a variant, control unit 6 may be configured to move each carrier 11 to the respective inspection station 14 so as to interpose at least a portion of support 27 between the respective carrier 11 and planar control module 20. Moreover, control unit 6 may be configured to power off each carrier 11 moved to the respective inspection station 14 so as to place carrier 11 onto support 27.

According to one or more embodiments, each carrier 11 may receive a respective package 2, as exemplified in the figures, or a plurality of carriers 11, preferably two carriers 11, may jointly receive a package 2. That is, a single package 2 may be picked and moved through the conveying device 7 by a plurality of carriers 11.

The carriers 11 may comprise retaining elements configured to maintain the package 2 in a predetermined position between the carriers 11. The carriers 11 may receive the package 2 by applying pressure by means of the respective retaining elements at opposite sides of the package 2.

Advantageously, thanks to the joint movers, the conveying device may be adapted to packages 2 of different dimensions.

For example, the plurality of carriers 11 may jointly position the package 2 at the inspection unit 8. The carriers 11 may release the package 2 on the inspection unit 8, e.g. on a weight detection sensor 9, the inspection unit 8 may perform the inspection and the carriers 11 may retrieve the package 2 from the inspection unit 8.

With particular reference to Figure 2, conveying device 7 may also comprise:
- an inlet conveyor 21 for feeding packages 2 to inlet station 12 at which packages 2 are transferred onto the respective carriers 11; and
- an outlet conveyor 22 for receiving packages 2 at outlet station 13; in particular outlet conveyor 22 receives packages 2, in use, from the respective carriers 11.

In more detail, inlet conveyor 21 may be configured to advance packages 2 from package filling apparatus 4 to planar motor 10.

Advantageously, inlet conveyor 21 may comprise one or more infeed tracks 23, in the specific example of Figure 2 shown one.

Infeed track 23 may comprise a conveyor belt for advancing packages 2.

According to some possible embodiments, outlet conveyor 22 may be configured to advance packages 2 from outlet station 13 to further end-of-line processing apparatuses.

Preferentially, outlet conveyor 22 may comprise an outfeed track 24.

Outfeed track 24 may comprise a conveyor belt for advancing packages 2.

With particular reference to Figure 1, package filling apparatus 4 may be configured to produce packages 2 and to fill packages 2 with the pourable product.

In more detail, package filling apparatus 4 may be configured to produce packages 2 by forming a tube 30 from web 3, longitudinally sealing tube 30, filling tube 30 with the pourable product and to transversally seal and cut tube 30.

With particular reference to Figure 1, package filling apparatus 4 may comprise:
- a conveying unit 31 for advancing (in a known manner) web 3 along a web advancement path P to a forming station, at which, in use, web 3 is formed into tube 4;
- an isolation chamber 32 having an inner environment, in particular an inner sterile environment containing a sterile gas, and being separated from an (hostile) outer environment;

- a tube forming and sealing device 33 configured to form tube 30 from the, in use, advancing web 3 within the inner environment and to longitudinally seal tube 30 within the inner environment;
- a filling device 34 for filling tube 30 with the pourable product; and
- a package shaping unit 35 configured to shape, to transversally seal and to transversally cut the, in use, advancing tube 30 for forming packages 2.

Moreover, packaging machine 1 may also comprise a sterilizing unit configured to sterilize the, in use, advancing web 3 at a sterilization station.

In use, packaging machine 1 produces packages 2 filled with the pourable product.

Operation of packaging machine 1 comprises at least the steps of:
- filling packages 2 with the pourable product, in particular executed by of package filling apparatus 7; and
- selectively executing an inspection on packages 2, in particular executed by inspection apparatus 5, even more particular by the one or more inspection units 8.

Moreover, operation of packaging machine 1 may also comprise the step of forming packages 2, in particular executed by package filling apparatus 7.

In particular, the steps of filling and forming of packages 2 may occur simultaneously.

Even more particular, during the step of forming and the step of filling, tube 30 is formed from advancing web 3, is longitudinally sealed, filled with the pourable product and transversally sealed and cut.

Preferentially, the step of selectively executing an inspection may be executed after the step of filling, in particular after the steps of filling and forming.

According to some preferred embodiments, operation of packaging machine 1 may also comprise a step of feeding, during which packages 2 are fed, in particular from package filling apparatus 7, to inspection apparatus 5.

According to some possible embodiments, the step of filling and/or the step of forming may be executed and/or modified in dependence of the inspection results obtained during the step of inspecting. **E.g.** operational parameters of packaging producing apparatus 4 may be defined in dependence of the inspection results.

In more detail, during the step of selectively executing an inspection, the following sub-steps are executed:
- loading packages 2 onto respective carriers 11 at inlet station 12;
- selectively moving some or all carriers 11, in particular together with their respective packages 2, to inspection station 14; and
- inspecting the packages 2 moved to inspection station 14.

Additionally, after the sub-step of inspecting, carriers 11 (and therewith also the respective packages 2) are moved to outlet station 13.

Moreover, during the step of selectively executing an inspection, also a further sub-step of moving is executed during which some carriers 11 are moved from inlet station 12 to outlet station 13 without passing through inspection station 14.

In further detail, during the sub-step of inspecting, any movement of carriers 11 is controlled by control unit 6 through controlling the local electromagnetic fields selectively generated by the coils.

In more detail, during the sub-step of inspecting:
- imaging device 15 may image the packages 2 moved to inspection station 14; and/or
- scanning device 16 may obtain three-dimensional data of the packages 2 moved to inspection station 14; and/or
- the weight detecting sensor 9 may determine the weight of the packages 2 moved to inspection station 14.

Additionally, during the sub-step of inspecting, each analyzing device 17 may be configured to determine a quality and/or detect defects of the packages 2 moved to inspection station 14 by analyzing the images and/or three-dimensional models reconstructed from the three - dimensional data and/or from the determined weight.

In more detail and according to some possible embodiments, during the sub-step of inspecting, the weight of packages 2 may be determined by the one or more respective sensors 26.

During the determination of the weight of each respective package 2, control unit 6 powers off the respective carrier 11; i.e. control unit 6 ensures that the local electromagnetic field is switched off such that carrier 11 is not subjected to any electromagnetic forces during the weight measurement.

In more detail, when reverting to the variant of Figure 5, control unit 6 controls each carrier 11 such to place each respective carrier 6 onto planar control module 20, preferentially the respective module.

When considering the variant of Figure 6, control unit 6 controls each carrier 11 such to place each respective carrier 6 onto the respective one or more sensors 26.

Moreover, when considering the variant of Figure 7, control unit 6 controls each carrier 11 such to place each respective carrier 6 onto the respective support 27.

Independently of the specific variant, the respective analyzing unit 17 receives signals dependent on the weight of the respective package 2 and of the weight of the respective carrier 11 from the respective one or more sensors 26. As the weight of each carrier 11 is known by the respective analyzing unit 17 (preferentially, the weight of each carrier 11 may have been previously gauged), it is possible to obtain the desired information with regard to the weight of each package 2.

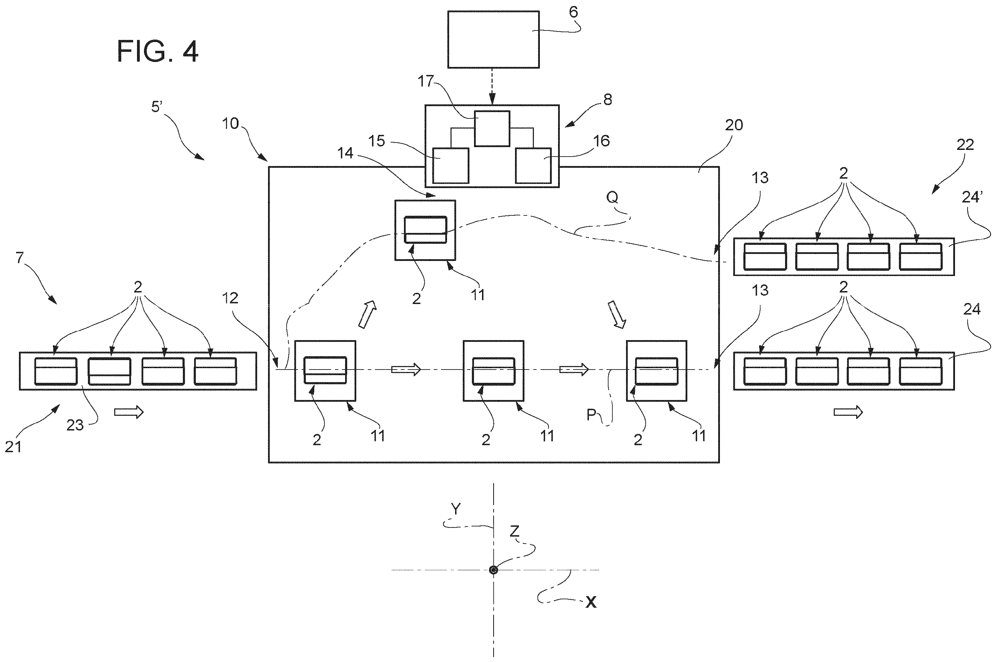

With reference to Figure 4, number 5' indicates an alternative embodiment of an inspection apparatus according to the present invention; as inspection apparatus 5' is similar to inspection apparatus 5, the following description is limited to the differences between them, and using the same references, where possible, for identical or corresponding parts.

In particular, inspection apparatus 5' differs from inspection apparatus 5 in that outlet conveyor 22 comprises a first outfeed track 24 and a second outfeed track 24' displaced from first outfeed track 24.

Moreover, control unit 6 may be configured to move carriers 11 such that all or some packages 2 being, in use, inspected by inspection unit 8 are fed to second outfeed track 24' and packages 2 which are not, in use, being inspected by inspection unit 8 are fed to first outfeed track 24.

E.g. control unit 6 may be configured to move carriers 11 such that these packages 2 having been, in use, inspected by inspection unit 8 and which shall be subjected to other quality assessments may be fed to second outfeed track 24'.

As operation of inspection apparatus 5' is similar to operation of inspection apparatus 5, the following description is limited to the differences between them.

In particular, during the step of selectively inspecting, all or some of the packages 2 which are inspected by inspection unit 8 are fed after the sub-step of inspecting to second outfeed track 24', while the other packages 2 which are not inspected are fed to first outfeed track 24.

The advantages of inspection apparatuses 5 and 5' and/or of packaging machine 1 according to the present invention will be clear from the foregoing description.

In particular, inspection apparatus 5 or 5' allows to inspect packages 2 without the need to interrupt production.

Another advantage is that inspected packages 2 can be easily fed back to be further advanced together with the non-inspected packages 2 or can be advanced differently.

A further advantage resides in that weight detection sensor 9 allows to efficiently and precisely measure the weight of packages 2 and comes along with an easy design.

Clearly, changes may be made to inspection apparatus 5 and 5' and/or packaging machine 1 as described herein without, however, departing from the scope of protection as defined in the accompanying claims.

According to some possible non-shown embodiments, packaging machine 1 may comprise a plurality of inspection apparatuses 5 or 5'.

Preferentially the plurality of inspection apparatuses 5 or 5' may be arranged in parallel or in series.

In particular, each inspection apparatus 5 or 5' may be arranged such to receive a portion of the plurality of produced packages 2 and/or to inspect a portion of the overall produced packages 2.

## Claims

1. Inspection apparatus (5) for the inspection of packages (2) produced in a packaging machine (1) comprising:
- a control unit (6) for controlling operation of the inspection apparatus (5);
- a conveying device (7); and
- an inspection unit (8) configured to inspect packages (2);
wherein the conveying device (7) comprises a planar motor (10) having a plurality of carriers (11) configured to receive packages (2) at an inlet station (12) and to deliver the packages (2) to an outlet station (13);
wherein the inspection unit (8) is arranged at an inspection station (14);
wherein the control unit (6) is configured to selectively control movement of the carriers (11) so as to selectively direct one or more carriers (11) to the inspection station (14) and afterwards to the outlet station (13); and
wherein the inspection unit (8) is configured to inspect the packages (2) moved, in use, to the inspection station (14),
wherein the inspection unit (8) further comprises a weight detection sensor (9) for determining the weight of the packages (2) moved to the inspection station (14), wherein the weight detection sensor (9) comprises at least one sensor (26) configured to determine the weight of the packages (2) moved to the inspection station (14),
wherein the planar motor (10) comprises a planar control module (20) comprising a plurality of coils configured to generate local electromagnetic fields for selectively moving the carriers (11);
the inspection apparatus being **characterized in that** the weight detection sensor (9) comprises a support (27) configured to carry each carrier (11) together with the respective package (2) moved to the respective inspection station (14) and the one or more sensors (26) are coupled to the support (27).

2. Inspection apparatus according to claim 1, wherein each carrier (11) receives a respective package (2) or wherein a plurality of carriers (11), preferably two carriers (11), jointly receive a package (2).

3. Inspection apparatus according to claim 1 or 2, wherein the control unit (6) is configured to selectively control movement of each one of the carriers (11) so as to selectively direct the carrier (11) to the inspection station (14) and afterwards to the outlet station (13).

4. Inspection apparatus according to any one of the preceding claims, wherein the inspection unit (8) comprises an imaging device (15) configured to acquire images of the packages (2) moved, in use, to the inspection station (14).

5. Inspection apparatus according to claim 4, further comprising an analyzing device (17) configured to analyze the images.

6. Inspection apparatus according to any one of the preceding claims, wherein the inspection unit (8) comprises a scanning device (16), in particular a laser scanning device (16), configured to scan and to obtain data about the three dimensional structure of the packages (2) moved, in use, to the inspection station (14).

7. Inspection apparatus according to claim 6, further comprising an analyzing device (17) configured to reconstruct respective three-dimensional models of the respective packages (2) from the respective three dimensional structure data obtained by the scanning device (16).

8. Inspection apparatus according to claim 5 or 7, wherein the analyzing device (17) is configured to determine the quality of and/or to detect defects of the packages (2), in particular based on an analysis of the respective images and/or of the respective three-dimensional models.

9. Inspection apparatus according to any of the previous claims, wherein the at least one sensor (26) is a strain gauge or an electro-magnetic force restoration sensor.

10. Inspection apparatus according to any one of the preceding claims, each support (27) is suspended from planar control module (20).

11. Inspection apparatus according to any one of the preceding claims, wherein control unit (6) is configured to move each carrier (11) to the respective inspection station (14) so as to interpose at least a portion of support (27) between the respective carrier (11) and planar control module (20).

12. Inspection apparatus according to the preceding claim, wherein control unit (6) is configured to power off each carrier (11) moved to the respective inspection station (14) so as to place carrier (11) onto support (27).

13. Inspection apparatus according to any one of the preceding claims, wherein each carrier (11) comprises at least one magnetic and/or ferromagnetic element;
wherein the planar control module (20) extends along a first axis (X) and a second axis (Y);
wherein the control unit (6) is configured to selectively control movement of each carrier (11) along the first axis (X) and the second axis (Y) by controlling the interaction of the local electromagnetic fields with the at least one magnetic and/or ferromagnetic element of each carrier (11).

14. Inspection apparatus according to any one of the preceding claims, wherein the conveying device (7) also comprises:
- an inlet conveyor (21) for feeding the packages (2) to the inlet station (12); and
- an outlet conveyor (22) for receiving the packages (2) at the outlet station (13);
wherein the outlet conveyor (22) comprises a first outfeed track (24) and a second outfeed track (24') displaced from the first outfeed track (24);
wherein the control unit (6) is configured to move the carriers (11) such that some or all of these packages (2) being, in use, inspected by the inspection unit (8) are fed to the second outfeed track (24') and the packages (2) which are not, in use, being inspected by the inspection unit (8) are fed to the first outfeed track (24).

15. Packaging machine (1) for producing packages (2) filled with a pourable product comprising:
- a package filling apparatus (4) for filling the packages (2) with the pourable product; and
- at least one inspection apparatus (5) according to any one of the preceding claims.

## Patentansprüche

1. Inspektionsvorrichtung (5) für die Inspektion von in einer Verpackungsmaschine (1) hergestellten Verpackungen (2), Folgendes umfassend:
- eine Steuereinheit (6) zur Steuerung des Betriebs der Inspektionsvorrichtung (5);
- eine Fördereinrichtung (7) und
- eine Inspektionseinheit (8), die dazu ausgelegt ist, Verpackungen (2) zu inspizieren;
wobei die Fördereinrichtung (7) einen Planarmotor (10) mit mehreren Trägern (11) umfasst, die dazu ausgelegt sind, Verpackungen (2) an einer Einlassstation (12) aufzunehmen und die Verpackungen (2) an eine Auslassstation (13) zu liefern;
wobei die Inspektionseinheit (8) an einer Inspektionsstation (14) angeordnet ist;
wobei die Steuereinheit (6) dazu ausgelegt ist, eine Bewegung der Träger (11) selektiv zu steuern, um einen oder mehrere Träger (11) selektiv zu der Inspektionsstation (14) und danach zu der Auslassstation (13) zu leiten; und
wobei die Inspektionseinheit (8) dazu ausgelegt ist, die im Gebrauch zu der Inspektionsstation (14) bewegten Verpackungen (2) zu inspizieren,
wobei die Inspektionseinheit (8) ferner einen Gewichtserfassungssensor (9) zum Bestimmen des Gewichts der zu der Inspektionsstation (14) bewegten Verpackungen (2) umfasst, wobei der Gewichtserfassungssensor (9) mindestens einen Sensor (26) umfasst, der dazu ausgelegt ist, das Gewicht der zu der Inspektionsstation (14) bewegten Verpackungen (2) zu bestimmen,
wobei der Planarmotor (10) ein planares Steuermodul (20) umfasst, das mehrere Spulen umfasst, die dazu ausgelegt sind, lokale elektromagnetische Felder zum selektiven Bewegen der Träger (11) zu erzeugen;
wobei die Inspektionsvorrichtung **dadurch gekennzeichnet ist, dass** der Gewichtserfassungssensor (9) eine Stütze (27) umfasst, die dazu ausgelegt ist, jeden Träger (11) zusammen mit der jeweiligen zu der jeweiligen Inspektionsstation (14) bewegten Verpackung (2) zu tragen, und der eine oder die mehreren Sensoren (26) mit der Stütze (27) gekoppelt sind.

2. Inspektionsvorrichtung nach Anspruch 1, wobei jeder Träger (11) eine jeweilige Verpackung (2) aufnimmt oder wobei mehrere Träger (11), vorzugsweise zwei Träger (11), gemeinsam eine Verpackung (2) aufnehmen.

3. Inspektionsvorrichtung nach Anspruch 1 oder 2, wobei die Steuereinheit (6) dazu ausgelegt ist, die Bewegung jedes der Träger (11) selektiv zu steuern, um den Träger (11) selektiv zur Inspektionsstation (14) und danach zur Auslassstation (13) zu leiten.

4. Inspektionsvorrichtung nach einem der vorhergehenden Ansprüche, wobei die Inspektionseinheit (8) eine Bildgebungseinrichtung (15) umfasst, die dazu ausgelegt ist, Bilder der Verpackungen (2) zu erfassen, die im Gebrauch zur Inspektionsstation (14) bewegt werden.

5. Inspektionsvorrichtung nach Anspruch 4, die ferner eine Analyseeinrichtung (17) umfasst, die dazu ausgelegt ist, die Bilder zu analysieren.

6. Inspektionsvorrichtung nach einem der vorhergehenden Ansprüche, wobei die Inspektionseinheit (8) eine Scaneinrichtung (16), insbesondere eine Laserscaneinrichtung (16), umfasst, die dazu ausgelegt ist, die dreidimensionale Struktur der im Gebrauch zur Inspektionsstation (14) bewegten Verpackungen (2) zu scannen und Daten darüber zu erhalten.

7. Inspektionsvorrichtung nach Anspruch 6, die ferner eine Analyseeinrichtung (17) umfasst, die dazu ausgelegt ist, jeweilige dreidimensionale Modelle der jeweiligen Verpackungen (2) aus den jeweiligen dreidimensionalen Strukturdaten, die durch die Scanvorrichtung (16) erhalten werden, zu rekonstruieren.

8. Inspektionsvorrichtung nach Anspruch 5 oder 7, wobei die Analyseeinrichtung (17) dazu ausgelegt ist, die Qualität der Verpackungen (2) zu bestimmen und/oder Defekte der Verpackungen zu erkennen, insbesondere basierend auf einer Analyse der jeweiligen Bilder und/oder der jeweiligen dreidimensionalen Modelle.

9. Inspektionsvorrichtung nach einem der vorhergehenden Ansprüche, wobei der mindestens eine Sensor (26) ein Dehnungsmessstreifen oder ein Sensor zur Wiederherstellung der elektromagnetischen Kraft ist.

10. Inspektionsvorrichtung nach einem der vorhergehenden Ansprüche, wobei jede Stütze (27) an dem planaren Steuermodul (20) aufgehängt ist.

11. Inspektionsvorrichtung nach einem der vorhergehenden Ansprüche, wobei die Steuereinheit (6) dazu ausgelegt ist, jeden Träger (11) zu der jeweiligen Inspektionsstation (14) zu bewegen, um zumindest einen Teil der Stütze (27) zwischen dem jeweiligen Träger (11) und dem planaren Steuermodul (20) einzuschieben.

12. Inspektionsvorrichtung nach dem vorhergehenden Anspruch, wobei die Steuereinheit (6) dazu ausgelegt ist, jeden zu der jeweiligen Inspektionsstation (14) bewegten Träger (11) auszuschalten, um den Träger (11) auf der Stütze (27) zu platzieren.

13. Inspektionsvorrichtung nach einem der vorhergehenden Ansprüche, wobei jeder Träger (11) mindestens ein magnetisches und/oder ferromagnetisches Element umfasst;
wobei sich das planare Steuermodul (20) entlang einer ersten Achse (X) und einer zweiten Achse (Y) erstreckt; wobei die Steuereinheit (6) dazu ausgelegt ist, selektiv die Bewegung jedes Trägers (11) entlang der ersten Achse (X) und der zweiten Achse (Y) durch Steuern der Wechselwirkung der lokalen elektromagnetischen Felder mit dem mindestens einen magnetischen und/oder ferromagnetischen Element jedes Trägers (11) zu steuern.

14. Inspektionsvorrichtung nach einem der vorhergehenden Ansprüche, wobei die Fördereinrichtung (7) außerdem Folgendes umfasst:
- einen Einlassförderer (21) zum Zuführen der Verpackungen (2) zur Einlassstation (12) und
- einen Auslassförderer (22) zur Aufnahme der Verpackungen (2) an der Auslassstation (13);
wobei der Auslassförderer (22) eine erste Auslaufbahn (24) und eine von der ersten Auslaufbahn (24) versetzte zweite Auslaufbahn (24') umfasst;
wobei die Steuereinheit (6) dazu ausgelegt ist, die Träger (11) so zu bewegen, dass einige oder alle dieser Verpackungen (2), die im Gebrauch von der Inspektionseinheit (8) inspiziert werden, der zweiten Auslaufbahn (24') zugeführt werden, und die Verpackungen (2), die im Gebrauch nicht von der Inspektionseinheit (8) inspiziert werden, der ersten Auslaufbahn (24) zugeführt werden.

15. Verpackungsmaschine (1) zum Herstellen von Verpackungen (2), die mit einem gießfähigen Produkt gefüllt sind, umfassend:
- eine Verpackungsfüllvorrichtung (4) zum Füllen der Verpackungen (2) mit dem gießfähigen Produkt und
- mindestens eine Inspektionsvorrichtung (5) nach einem der vorhergehenden Ansprüche.

## Revendications

1. Appareil d'inspection (5) pour l'inspection d'emballages (2) produits dans une machine d'emballage (1), comprenant :
- une unité de commande (6) pour commander le fonctionnement de l'appareil d'inspection (5) ;
- un dispositif de transport (7) ; et
- une unité d'inspection (8) configurée pour inspecter des emballages (2) ;
dans lequel le dispositif de transport (7) comprend un moteur plan (10) ayant une pluralité de dispositifs de transport (11) configurés pour recevoir des emballages (2) au niveau d'un poste d'entrée (12) et pour délivrer les emballages (2) au niveau d'un poste de sortie (13) ;
dans lequel l'unité d'inspection (8) est agencée au niveau d'un poste d'inspection (14) ;
dans lequel l'unité de commande (6) est configurée pour commander sélectivement le déplacement des dispositifs de transport (11) de manière à diriger sélectivement un ou plusieurs dispositifs de transport (11) vers le poste d'inspection (14) et ensuite vers le poste de sortie (13) ; et
dans lequel l'unité d'inspection (8) est configurée pour inspecter les emballages (2) déplacés, en cours d'utilisation, vers le poste d'inspection (14),
dans lequel l'unité d'inspection (8) comprend en outre un capteur de détection de poids (9) pour déterminer le poids des emballages (2) déplacés vers le poste d'inspection (14), dans lequel le capteur de détection de poids (9) comprend au moins un capteur (26) configuré pour déterminer le poids des emballages (2) déplacés vers le poste d'inspection (14),
dans lequel le moteur plan (10) comprend un module de commande plan (20) comprenant une pluralité de bobines configurées pour générer des champs électromagnétiques locaux pour déplacer sélectivement les dispositifs de transport (11) ;
l'appareil d'inspection étant **caractérisé en ce que** le capteur de détection de poids (9) comprend un support (27) configuré pour porter chaque dispositif de transport (11) avec l'emballage (2) respectif déplacé vers le poste d'inspection (14) respectif et les un ou plusieurs capteurs (26) sont couplés au support (27).

2. Dispositif d'inspection selon la revendication 1, dans lequel chaque dispositif de transport (11) reçoit un emballage (2) respectif ou dans lequel une pluralité de dispositifs de transport (11), de préférence deux dispositifs de transport (11), reçoivent conjointement un emballage (2).

3. Appareil d'inspection selon la revendication 1 ou 2, dans lequel l'unité de commande (6) est configurée pour commander sélectivement le déplacement de chacun des dispositifs de transport (11) de manière à diriger sélectivement le dispositif de transport (11) vers le poste d'inspection (14) et ensuite vers le poste de sortie (13).

4. Appareil d'inspection selon l'une quelconque des revendications précédentes, dans lequel l'unité d'inspection (8) comprend un dispositif d'imagerie (15) configuré pour acquérir des images des emballages (2) déplacés, en cours d'utilisation, vers le poste d'inspection (14).

5. Appareil d'inspection selon la revendication 4, comprenant en outre un dispositif d'analyse (17) configuré pour analyser les images.

6. Appareil d'inspection selon l'une quelconque des revendications précédentes, dans lequel l'unité d'inspection (8) comprend un dispositif de balayage (16), en particulier un dispositif de balayage laser (16), configuré pour balayer et pour obtenir des données concernant la structure tridimensionnelle des emballages (2) déplacés, en cours d'utilisation, vers le poste d'inspection (14).

7. Appareil d'inspection selon la revendication 6, comprenant en outre un dispositif d'analyse (17) configuré pour reconstruire des modèles tridimensionnels respectifs des emballages (2) respectifs à partir des données de structure tridimensionnelle respectives obtenues par le dispositif de balayage (16).

8. Appareil d'inspection selon la revendication 5 ou 7, dans lequel le dispositif d'analyse (17) est configuré pour déterminer la qualité et/ou pour détecter des défauts des emballages (2), en particulier sur la base d'une analyse des images respectives et/ou des modèles tridimensionnels respectifs.

9. Appareil d'inspection selon l'une quelconque des revendications précédentes, dans lequel l'au moins un capteur (26) est une jauge de contrainte ou un capteur à restauration de force électromagnétique.

10. Appareil d'inspection selon l'une quelconque des revendications précédentes, dans lequel chaque support (27) est suspendu à un module de commande plan (20).

11. Appareil d'inspection selon l'une quelconque des revendications précédentes, dans lequel l'unité de commande (6) est configurée pour déplacer chaque dispositif de transport (11) vers le poste d'inspection (14) respectif de manière à interposer au moins une partie du support (27) entre le dispositif de transport (11) respectif et le module de commande plan (20).

12. Appareil d'inspection selon la revendication précédente, dans lequel l'unité de commande (6) est configurée pour mettre hors tension chaque dispositif de transport (11) déplacé vers le poste d'inspection (14) respectif de manière à placer le dispositif de transport (11) sur support (27).

13. Appareil d'inspection selon l'une quelconque des revendications précédentes, dans lequel chaque dispositif de transport (11) comprend au moins un élément magnétique et/ou ferromagnétique ;
dans lequel le module de commande plan (20) s'étend le long d'un premier axe (X) et d'un second axe (Y) ;
dans lequel l'unité de commande (6) est configurée pour commander sélectivement le déplacement de chaque dispositif de transport (11) le long du premier axe (X) et du second axe (Y) en commandant l'interaction des champs électromagnétiques locaux avec l'au moins un élément magnétique et/ou ferromagnétique de chaque dispositif de transport (11).

14. Appareil d'inspection selon l'une quelconque des revendications précédentes, dans lequel le dispositif de transport (7) comprend également :
- un convoyeur d'entrée (21) pour alimenter les emballages (2) au niveau du poste d'entrée (12); et
- un convoyeur de sortie (22) pour recevoir les emballages (2) au niveau du poste de sortie (13) ;
dans lequel le convoyeur de sortie (22) comprend une première voie de sortie (24) et une seconde voie de sortie (24') déplacée par rapport à la première voie de sortie (24) ;
dans lequel l'unité de commande (6) est configurée pour déplacer les dispositifs de transport (11) de telle sorte que certains ou l'ensemble de ces emballages (2) inspectés, en cours d'utilisation, par l'unité d'inspection (8) sont alimentés dans la seconde voie de sortie (24') et les emballages (2) qui ne sont pas, en cours d'utilisation, inspectés par l'unité d'inspection (8) sont alimentés dans la première voie de sortie (24).

15. Machine d'emballage (1) pour la fabrication d'emballages (2) remplis d'un produit fluide, comprenant :
- un appareil de remplissage d'emballage (4) pour remplir les emballages (2) avec le produit fluide ; et
- au moins un appareil d'inspection (5) selon l'une quelconque des revendications précédentes.
